# EUROPÄISCHE PATENTSCHRIFT

(11) **EP 1 407 170 B1**
(45) Veröffentlichungstag und Bekanntmachung des Hinweises auf die Patenterteilung: **04.01.2006**
(21) Anmeldenummer: 02743234.3
(22) Anmeldetag: 20.06.2002
(51) Int. Cl.: F16H 57/00

(54) **BAUSATZ FÜR EINE BAUREIHE VON PLANETENGETRIEBEN, PLANETENTRÄGER UND ANTRIEB**
KIT FOR A SERIES OF PLANETARY GEARS, PLANET CARRIER AND DRIVE
PRET-A-MONTER POUR UNE SERIE D'ENGRENAGES PLANETAIRES, PORTE-SATELLITES ET ENTRAINEMENT

(30) Priorität: 06.07.2001 DE 10132303
(43) Veröffentlichungstag der Anmeldung: 14.04.2004
(60) Teilanmeldung: 05011875.1
(73) Patentinhaber: Sew-Eurodrive GmbH & Co. KG, 76646 Bruchsal (DE)
(72) Erfinder: CHRIST, Michael, 76689 Karlsdorf-Neuthard (DE)
(86) Internationale Anmeldenummer: PCT/EP2002/006825
(87) Internationale Veröffentlichungsnummer: WO 2003/004908

(56) Entgegenhaltungen:
- EP-A- 0 738 843
- DE-A- 10 049 564
- DE-A- 19 531 043
- DE-C- 19 711 423
- US-A- 5 409 430
- US-A- 5 509 865

## Beschreibung

Die Erfindung betrifft einen Bausatz für eine Baureihe von Planetengetrieben nach dem Oberbegriff des Anspruch 1, einen Antrieb nach dem Oberbegriff des Anspruchs 13 und ein Planetengetriebe nach dem Oberbegriff des Anspruchs 15.

Ein- oder mehrstufige Planetengetriebe sind in einwangiger oder zweiwangiger Ausführung bekannt. Sie umfassen mindestens einen eine Stegwange aufweisenden Planetenträger, einen oder mehrere Planeten, mindestens eine Sonne und mindestens ein Hohlrad.

Baureihen von Planetengetrieben umfassen mehrere Baugrößen, die jeweils mehrere Varianten umfassen. Dabei variieren innerhalb einer Baugröße beispielsweise Verzahnungsdaten der Verzahnungsteile. Die Baugröße an sich ist definiert über einen Parameter oder eine Menge von Parametern. Üblich sind dabei die Parameter der Achshöhe einer Welle, wie beispielsweise eintreibende oder abtreibende Welle. Alternativ oder in Kombination sind auch Definitionen der Baugröße mittels Nenn-Drehmomentwerten oder Nenn-Leistungen. Nachteilig ist dabei, dass für die vielen Varianten eine hohe Teilevielfalt notwendig ist und daher die Fertigungs- und Lagerkosten hoch sind. Insbesondere wenn ein großer Bereich von realisierbaren Übersetzungszahlen erforderlich ist müssen nicht nur die Verzahnungsdaten sondern unter Umständen auch die konstruktiven Ausführungen der Einzelkomponenten variiert werden, was die Teilevielfalt noch weiter erhöht.

Bei Antrieben oder Getrieben sind die maximal übertragbaren Drehmomente der jeweiligen Varianten berechenbar oder bestimmbar. Der Fachmann des Standes der Technik legt die Baureihe derart aus, dass die Stufung der Übersetzungszahlen möglichst viele Anwendungen der Kunden ermöglicht und die Stufung der Drehmomente den am Markt üblichen Anforderungen genügt.

Aus der gattungsgemässen EP 0 738 843 A2 ist ein Planetengetriebe bekannt, bei dem zwei Sorten von Bohrungen für Planetenräder vorgesehen sind. Dabei kämmt die Sonne mit den Planetenrädern, die in der ersten Sorte Bohrungen vorgesehen sind und diese kämmen mit den Planetenrädern, welche in der zweiten Sorte Bohrungen vorgesehen sind. Die letztgenannten Planetenräder kämmen mit dem Hohlrad. Ein Entfernen der Planetenräder der ersten Sorte Bohrungen würde die Funktion des Getriebes verhindem. Ein Austauschen der Planetenräder in der ersten mit den Planetenrädern in der zweiten Sorte Bohrungen verändert das Getriebe nicht.

Aus der DE 197 11 423 C1 ist ein Kunststoffgetriebe bekannt, bei dem die Planetenräder auf einer ersten Sorte Zapfen oder einer zweiten Sorte Zapfen aufgesteckt werden können. Dazu ist die Wange des Planetenträgers einstückig mit den sechs Zapfen ausgeführt. Allerdings verursachen leer stehende Zapfen ein höheres Trägheitsmoment, höhere Planschverluste und höheren Materialaufwand. Darüber hinaus sind die Außenradien der Planetenräder nur bis zu einem maximalen Durchmesser vorsehbar, nach dessen Überschreitung das jeweilige Planetenrad nicht mehr auf den Zapfen der ersten Sorte aufsteckbar ist, weil es mit dem zweiten Zapfen kollidiert.

Der Erfindung liegt daher die Aufgabe zugrunde, eine Baureihe von Planetengetrieben die bei einem großen Bereich von realisierbaren Übersetzungszahlen niedrige Fertigungs- und Lagerkosten aufweist.

Erfindungsgemäß wird die Aufgabe bei dem Bausatz nach den in Anspruch 1, bei dem Antrieb nach den in Anspruch 13 und bei dem Planetengetriebe nach den in Anspruch 15 angegebenen Merkmalen gelöst.

Dabei ist wesentlich, dass der Bausatz für eine Baureihe von Planetengetrieben vorgesehen ist,
wobei die Baureihe mindestens eine Baugröße, insbesondere eine mittels einer Achshöhe der Abtriebswelle definierte, umfasst,
wobei die mindestens eine Baugröße mindestens zwei Varianten umfasst,
wobei das Planetengetriebe mindestens eine Planetengetriebestufe umfasst,
wobei der Bausatz zumindest einen eine Stegwange oder zwei Stegwangen aufweisenden Planetenträger, Planeten, Sonne und Hohlrad umfasst,
wobei der Planetenträger auf seiner Stegwange eine erste Sorte Bohrungen und eine zweite Sorte Bohrungen umfasst,
die Bohrungen der ersten Sorte auf einem ersten Kreis mit einem ersten Radius a1 zur fiktiven Achse des Planetenträgers angeordnet sind,
und die Bohrungen der zweiten Sorte auf einem zweiten Kreis mit einem zweiten Radius a2 zur fiktiven Achse des Planetenträgers angeordnet sind,
wobei innerhalb einer Baugröße
bei einer ersten Variante Planetenbolzen in der ersten Sorte Bohrungen vorgesehen sind und
bei einer zweiten Variante Planetenbolzen in der zweiten Sorte Bohrungen vorgesehen sind,
wobei die zweite Variante aus der ersten Variante durch bloßes Umstecken der Planetenbolzen von der ersten in die zweite Sorte Bohrungen ausgeführt ist.

Von Vorteil ist dabei, dass die Planetenbolzen auf verschiedenen Radien positionierbar sind. Somit sind verschieden Achsabstände zwischen Sonne und Planeten bei verschiedenen Varianten ausführbar. Daher ist auch der realisierbare Bereich von Übersetzungszahlen viel größer als bei nur einem Achsabstand. Da der Planetenträger bei verschiedenen Varianten verwendbar ist und die Bohrungen derart ausführbar sind, dass dieselben Bolzen bei verschiedenen Varianten einsetzbar sind, ist die Teilevielfalt der Baureihe erheblich reduzierbar und somit auch die Kosten.

Bei einer vorteilhaften Ausgestaltung ist die Stufung der maximal übertragbaren Drehmomente mehrerer Varianten in Baugrößen derart, dass das maximal übertragbare Drehmoment einer jeweiligen Variante dem maximal übertragbaren Drehmoment einer Variante einer jeweils anderen Baugröße entspricht. Von Vorteil ist dabei, dass zu einer bestehenden Variante spezielle Kundenwünsche, wie beispielsweise nach größerer Verdrehsteifigkeit bei gleich großem, maximal übertragbarem Drehmoment, insbesondere mit gleicher Übersetzungszahl, innerhalb der Baureihe erfüllbar sind, fast ohne zusätzliche Teile sondern durch Umsetzen der Planeten mit Lagern auf die Bolzen der anderen Sorte. Gegebenenfalls ist dabei besonders vorteilhaft und kostengünstig zur Durchmesseranpassung eine auf die dünneren Bolzen aufgesteckte Hülse, die je nach Variante zu verwenden oder herauszunehmen ist. Somit sind mit Ausnahme der Hülsen alle Teile, umfassend Lager für Planeten, Planeten, Sonne, Hohlrad, Planetenträger, Wangen und Bolzen wiederverwendbar.

Bei einer vorteilhaften Ausgestaltung ist der erste Radius größer als der zweite Radius. Von Vorteil ist dabei, dass bei der Variation der Verzahnungsdaten der Planeten auch möglichst große Außendurchmesser der Verzahnungen verwendbar sind.

Bei einer vorteilhaften Ausgestaltung sind die erste und/oder zweite Sorte Bohrungen exzentrisch ausgeführt. Bei einer anderen vorteilhaften Ausgestaltung sitzen die Planeten mit ihren zugehörigen Lagern auf Hülsen mit exzentrisch ausgeführter Bohrung, die auf die zylindrischen Planetenbolzen aufgesteckt sind. Von Vorteil ist dabei, dass der von den Verzahnungsdaten der Sonne, des Hohlrades und der Planeten bestimmte Achsabstand der Planeten zur Sonne sich beim Fertigen automatisch einstellt und sogar Fertigungstoleranzen ausgeglichen werden.

Bei einer anderen vorteilhaften Ausgestaltung sind der erste und der zweite Radius gleich.

Die erfinderische Aufgabe wird auch gelöst von einer Baureihe, die mehrere erfindungsgemäße Baureihen umfasst und/oder um nicht-erfindungsgemäße Varianten erweitert ist. Die genannten Vorteile der erfindungsgemäßen Baureihe bleiben. Denn auch sie gehen in eine so erweiterte Baureihe über.

Erfindungsgemäß wird die Aufgabe bei dem Antrieb dadurch gelöst, dass eine vorteilhafte oben beschriebene Planetengetriebestufe im Antrieb vorgesehen ist.

Bei einer vorteilhaften Ausgestaltung ist der Antrieb ein Servoantrieb, insbesondere ein spielarmer und verdrehsteifer Servoantrieb. Vorteilhaft ist dabei, dass der ein Baukasten von Servoantrieben mit großer Vielfalt unter Verwendung nur weniger Teile ausführbar ist, wobei sogar spezielle Wünsche von Kunden ausführbar sind ohne zusätzliche Teile, sondern durch bloßes Ändern des Fertigungsablaufes. Im Stand der Technik sind dafür Sonderkonstruktionen notwendig, die extrem aufwendig sind und zu langen Lieferzeiten führen. Bei dem erfindungsgemäßen Servoantrieb ist sogar eine Baureihe ausführbar, die Varianten ergänzt um weitere Varianten mit größerer Verdrehsteifigkeit und gleichem maximal übertragbarem Drehmoment und gleicher Übersetzungszahl.

Dies ist sogar ausführbar ohne zusätzliche Teile sondern bloß durch geschickte Dimensionierung der Baureihe insgesamt, insbesondere der Stufung der maximal übertragbaren Drehmomente der Varianten. Diese Stufensprünge des maximal übertragbaren Drehmomentes sind also bestimmt von den jeweils kleineren Baugrößen.

### Bezugszeichenliste:

- 1, 21, 31, 41: Planetenträger
- 2: Stegstrebe
- 3, 23, 43: Planet
- 4, 24, 44: Lager
- 5, 25, 35, 45: Planetenbolzen
- 6, 26, 36, 46: Lager für Abtrieb
- 8, 27, 28, 38, 48: Stegwange
- 32: erste Sorte Bohrungen
- 33: zweite Sorte Bohrungen
- 22, 42, 51, 52, 53, 54: Stegbolzen
- 61: Langloch
- a1, a2: Radius = Sonne-Planeten-Achsabstand

Die Erfindung wird nun anhand von Abbildungen näher erläutert:

### Abbildungsverzeichnis:

Fig.1: Planetengetriebe mit Stegstreben und einer Sorte von Bohrungen zur Aufnahme von Planetenbolzen
Fig.2: Planetengetriebe mit erster und zweiter Sorte von Bohrungen auf verschiedenen Radie a1 und a2
Fig.3: Planetenträger mit Bohrungen in der ISO-Ansicht
Fig.4: Planetengetriebe mit erster und zweiter Sorte von Bohrungen auf gleichem Radius und vier Planeten
Fig.5a: Planetengetriebe mit erster und zweiter Sorte von Bohrungen auf gleichem Radius und vier Planeten
Fig. 5b: Planetengetriebe mit geradverzahntem Stegbolzen
Fig. 5c: Planetengetriebe mit Schrägrändel-verzahntem Stegbolzen
Fig. 5d: Planetengetriebe mit Kreuzrändel-verzahntem Stegbolzen
Fig. 5e: Planetengetriebe mit Stegbolzen in Pressverbindung
Fig. 6: Langloch zur Aufnahme von Planetenbolzen

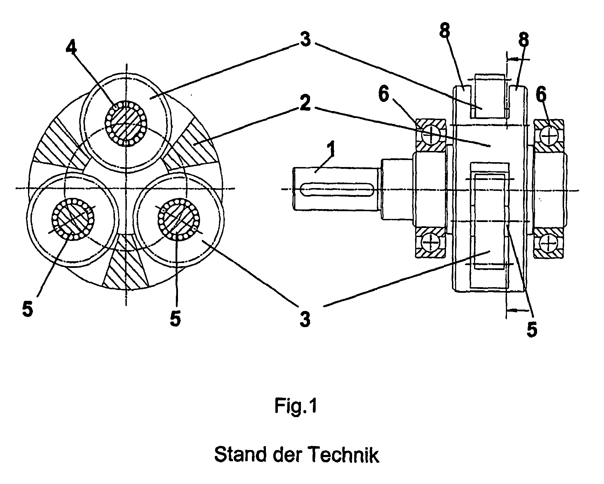

In der Figur 1 ist ein zweiwangiges Planetengetriebe nach Stand der Technik gezeigt. Der Planetenträger 1 ist zusammen mit den Stegstreben 2 aus einer Urform gefertigt. Die Stegstreben 2 haben ein großes Volumen und benötigen somit viel Material. Dadurch ist das Getriebe schwer und kostspielig.

Zwischen den Stegstreben 2 sind die Planeten 3 angeordnet, die über Lager 4 auf den Planetenbolzen 5 sitzen. Diese Planetenbolzen 5 sind in Bohrungen der ersten Stegwange 8 und der zweiten Stegwange 8 eingesteckt. Die Bohrungen für Planetenbolzen 5 liegen auf einem Kreis, der den Radius a zur fiktiven Achse, also der mathematischen Achse des Planetenträgers 1, aufweist.

Der Planetenträger 1 ist über Lager 6 im Gehäuse gelagert.

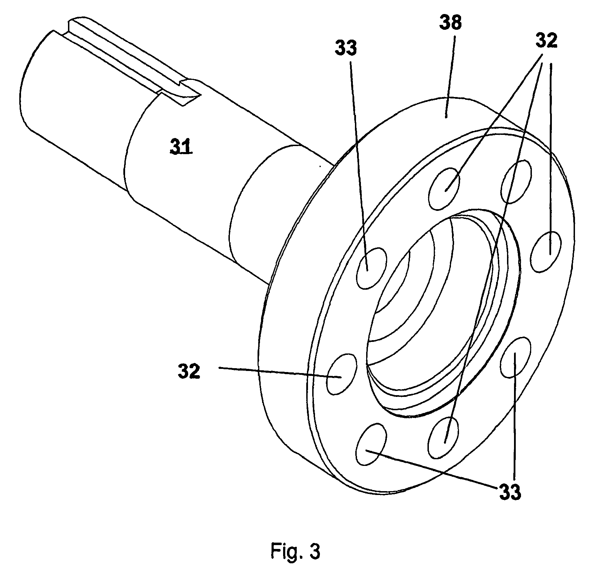

In der Figur 3 ist für ein erstes erfindungsgemäßes Ausführungsbeispiel ein Planetenträger 31 für ein ein- oder zweiwangiges Planetengetriebe gezeigt. Der Planetenträger 31 weist eine erste Wange 38 auf. Diese ist mit einer ersten Sorte Bohrungen 32 und mit einer zweiten Sorte Bohrungen 33 versehen.

Die erste Sorte Bohrungen 32 liegt auf einem Kreis mit einem ersten Radius a1 zur fiktiven Achse. Die zweite Sorte Bohrungen 33 liegt auf einem Kreis mit einem zweiten Radius a2 zur fiktiven Achse. Der zweite Radius a2 ist größer als der erste Radius a1.

Innerhalb einer Baugröße bei einer ersten Variante sind Planetenbolzen zur Bildung einer jeweiligen Achse für Planeten vorgesehen, die in die erste Sorte Bohrungen 32 eingesteckt sind. Bei einer weiteren Variante derselben Baugröße sind Planetenbolzen vorgesehen, die in die zweite Sorte Bohrungen 33 eingesteckt sind.
Da der Radius a1 der ersten Sorte Bohrungen 32 verschieden ist von dem Radius a2 der zweiten Sorte Bohrungen 33, ist bei den beiden genannten Varianten der Achsabstand von Sonne und Planeten verschieden.

Bei gegebenem Achsabstand werden innerhalb der jeweiligen Baugröße die Verzahnungen von Sonne, Planeten und Hohlrad variiert zur Erreichung verschiedener Übersetzungszahlen.

Der insgesamt innerhalb der Baugröße mit der Variation der Verzahnungen realisierbare Bereich von Übersetzungszahlen ist bei der erfindungsgemäßen Baugröße der Baureihe mit den beiden genannten Varianten größer als der Bereich, der mit nur einer Variante erzielbar wäre. Vorteiligerweise sind derselbe Planetenträger, dieselben Planetenbolzen und teilweise auch Sonne, Hohlrad oder Planeten bei beiden genannten Varianten einsetzbar. Dadurch wird die Teilevielzahl der Baureihe erheblich reduziert und somit auch die Fertigungs- und Lagerkosten. Außerdem ist im selben Gehäuse eine Variante mit Achsabstand a1 oder eine andere Variante mit Achsabstand a2 ausführbar durch bloßes Umstecken der Planetenbolzen in die andere Sorte Bohrungen.

Der Planetenträger 31 ist bei einwangigen und bei zweiwangigen Ausführungen einsetzbar. Sie stellen entweder ein erstes oder ein zweites erfindungsgemäßes Ausführungsbeispiel dar.
Dabei sind zweiwangige Ausführungen mit Stegbolzen ausführbar, die in die andere, nicht von Planetenbolzen besetzte Sorte Bohrungen einsteckbar sind.

Bei weiteren erfindungsgemäßen Ausführungsbeispielen ist der zweite Radius a2 ist kleiner als der erste Radius a1.

Ein drittes erfindungsgemäßes Ausführungsbeispiel umfasst eine Baureihe, die Varianten in einwangiger und weitere Varianten in zweiwangiger Ausführung umfasst. Somit ist der Planetenträger 31 mehrfach verwendbar bei gattungsgemäß verschiedenen Varianten.

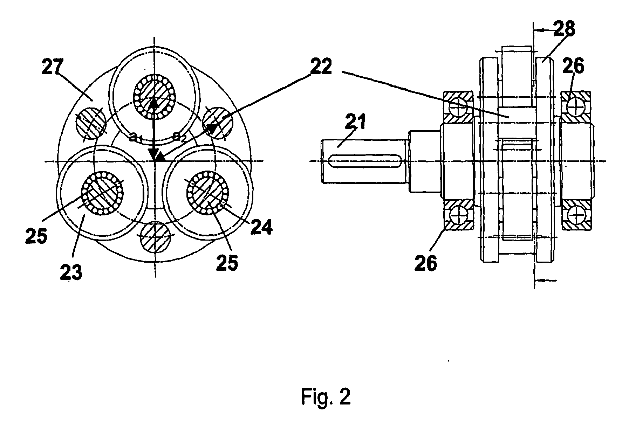

In der Figur 2 ist eine erste Variante eines erfindungsgemäßes Ausführungsbeispiel in zweiwangiger Ausführung gezeigt.

Der Planetenträger 21 weist keine Stegstreben auf sondern eine erste Stegwange 27, die mit einer ersten und mit einer zweiten Sorte Bohrungen versehen ist.

Die zweite separate Stegwange 28 weist ein entsprechendes Bohrungsbild auf. Die erste Sorte Bohrungen dient zur Aufnahme der Planetenbolzen 25, die zur Bildung einer Achse für Lager 24 mit Planeten 23 vorgesehen sind. Die Stegbolzen 22 verbinden die beiden Wangen 28 und sind in die zweite Sorte Bohrungen eingesteckt. Das Planetengetriebe ist somit materialsparender und leichter ausgeführt als ein Planetengetriebe nach Figur 1. Die in der Figur 2 gezeigten Bohrungen für Planetenbolzen 25 liegen auf einem Kreis, der den Radius a1 zur fiktiven Achse, also der mathematischen Achse des Planetenträgers, aufweist. Somit beträgt der Achsabstand zwischen Sonne und Planeten a1. Die Stegbolzen 22 liegen auf einem Kreis mit Radius a2.

Bei einer weiteren Variante der Baugröße sind die Planetenbolzen 25 und die Stegbolzen 22 vertauscht vorgesehen. Dazu sind die Bohrungen und jeweiligen Bolzen (22, 25) gleichartig und somit kompatibel ausgeführt. Somit beträgt der Achsabstand zwischen Sonne und Planeten bei dieser zweiten Variante a2. Daher lässt sich mit beiden Varianten insgesamt ein sehr weiter Bereich von Übersetzungszahlen realisieren und außerdem ist die Teilevielfalt weiter reduziert und die Kosten sind vermindert. Der Planetenträger ist über Lager 26 im Gehäuse gelagert.

Bei einem anderen erfindungsgemäßen Ausführungsbeispiel weisen die erste Sorte Bohrungen und die zweite Sorte Bohrungen den selben Radius a1 und a2 innerhalb derselben einen Baugröße auf. Jedoch ist der Durchmesser der Bohrungen der ersten und der zweiten Sorte verschieden. Die in die erste Sorte Bohrungen eingesteckten Planetenbolzen weisen einen kleineren Durchmesser auf als die in die zweite Sorte eingesteckten Stegbolzen. Somit sind nur kleine Lager für die Planeten notwendig. Diese Lager sind daher kostengünstig. Die Stegbolzen werden dicker gewählt, um eine stabile Verbindung der beiden Wangen zu gewährleisten. Zur Erzeugung der anderen Variante ist dann ein Herausnehmen der Lager für Planeten notwendig und ein Aufstecken anderer Lager für Planeten auf die nun als Planetenbolzen einsetzbaren Stegbolzen. Da der Durchmesser der Stegbolzen jedoch größer ist als der Durchmesser der Planetenbolzen der ersten Variante, sind die Lager kostspieliger. Es sind aber dieselben Planeten verwendbar. Außerdem sind in dieser Variante größere maximal übertragbare Drehmomente realisierbar,
wobei die Übersetzungszahl gleich ist. Des Weiteren ist damit der große Vorteil verbunden, innerhalb derselben Baugröße eine Variante anbieten zu können mit gleicher Übersetzungszahl und höherer Verdrehsteifigkeit. Dies ist insbesondere für Antriebe bei Holzverarbeitungsmaschinen von Vorteil, die oft eine hohe Verdrehsteifigkeit erfordern.

Außerdem ist innerhalb der Baureihe mit der letztgenannten Variante dieser Baugröße eine Möglichkeit vorhanden, spezielle Kundenforderungen zu erfüllen. Beispielsweise wünscht der Kunde zu einer Variante einer kleineren Baugröße der Baureihe ein Ergänzung mit gleicher Übersetzungszahl, gleichem maximal übertragbarem Drehmoment und größerer Verdrehsteifigkeit. Genau dies ist nun mit der beschriebenen Variante der größeren Baugröße erfüllt. Besonderes Kennzeichen der Baureihe ist dabei, dass das maximal übertragbare Drehmoment der größeren Baugröße bei derjenigen Variante, bei der Stegbolzen als Planetenbolzen eingesetzt sind, dem maximal übertragbaren Drehmoment einer Variante der kleineren Baugröße mit Planetenbolzen in der ersten Sorte Bohrungen gleicht.

Bei weiteren erfindungsgemäßen Ausführungsbeispielen sind statt dicker und dünner Bolzen nur dünne Bolzen, also Bolzen mit dem Durchmesser der kleinsten Bohrung innerhalb der Baugröße oder Baureihe vorgesehen. Zur Erzeugung dicker Bolzen werden auf die dünnen Bolzen aufgesteckte Hülsen verwendet. Insbesondere bei einwangigen Ausführungen sind damit große Einsparungen erzielbar bei Kosten, wie Lagerkosten und Fertigungskosten.

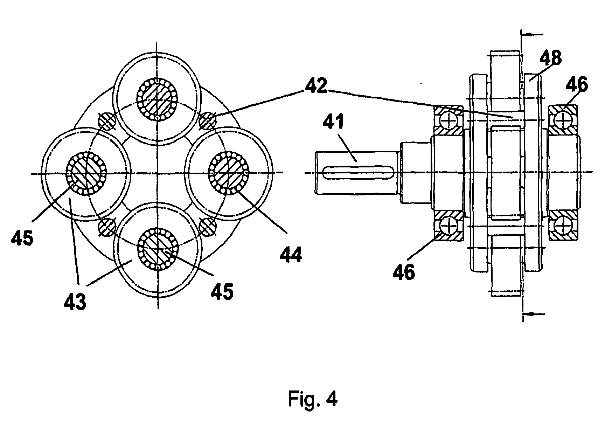

In der Figur 4 und 5a sind erfindungsgemäße Ausführungsbeispiele gezeigt, die statt drei Planeten und Stegbolzen vier aufweisen.

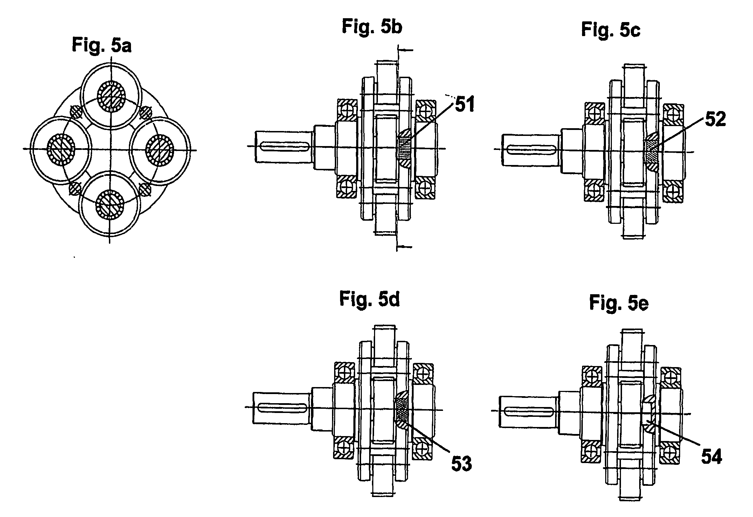

Die Figuren 5b bis 5e zeigen verschiedene erfindungsgemäße Ausführungsbeispiele.

In der Figur 5b ist die Verbindungsart zwischen dem Stegbolzen 51 und der weiteren Wange verdeutlicht. Dabei ist der Stegbolzen zumindest an seinem wangenseitigen Ende geradverzahnt und wird bei der Fertigung in die Stegwange eingepresst.

In der Figur 5c ist der Stegbolzen 52 an seinem wangenseitigen Ende mit einem Schrägrändel versehen und wird beim Fertigen eingepresst unter gleichzeitigem Drehen.

In der Figur 5d ist der Stegbolzen 53 mit einem Kreuzrändel versehen und wird ebenfalls entsprechend eingepresst.

Die Figuren 5b bis 5d stellen also eine formschlüssige Verbindung dar, die eine hohe Tragfähigkeit aufweist.

In der Figur 5e weist die weitere Stegwange ein Sackloch auf, mit dem der zylindrisch ausgeführte Stegbolzen 54 mittels einer Pressverbindung verbunden ist.

Bei weiteren erfindungsgemäßen Ausführungsbeispielen sind auch andere Verbindungen verwendbar, wie beispielsweise konisch ausgeführte Stegbolzen mit einer entsprechend geformten Ausnehmung in der Stegwange. Auch Stegbolzen mit Längsrändel sind verwendbar. Weitere vorteilhafte Verbindungen sind auch Schraubverbindungen, Klebeverbindungen oder Kombinationen von genannten Verbindungen.

Bei weiteren erfindungsgemäßen Ausführungsbeispielen sind Stegbolzen und/oder Planetenbolzen und Stegwange aus einem Guss, also einer Urform, hergestellt.

Bei weiteren erfindungsgemäßen Ausführungsbeispielen sind auf die Stegbolzen (22, 42) Abstandshülsen gesteckt, wobei auch Exzenterhülsen verwendbar sind.

Bei weiteren erfindungsgemäßen Ausführungsbeispielen sind die Lager der Planeten auf Exzenterhülsen aufgesteckt, die auf Planetenbolzen gesteckt sind. Somit stellt sich beim Zusammenfügen der Achsabstand der Planeten zur Sonne automatisch ein und es werden sogar Fertigungsfehler hervorragend ausgeglichen.

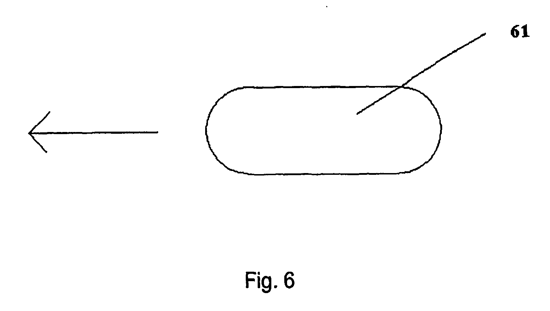

Bei weiteren erfindungsgemäßen Ausführungsbeispielen sind die Bohrungen in den Stegwangen als Langloch 61 ausgeführt, das in radialer Richtung zur Achse der Sonne orientiert ist. Eines der Langlöcher 61 ist in Figur 6 schematisch gezeigt. Die Orientierungsrichtung ist mit einem Pfeil angedeutet. Das Langloch dient anstatt von Rundbohrungen zur Aufnahme von Planetenbolzen. Die Planetenbolzen sind zylindrisch ausgeführt. Beim Fertigen werden die Planentenbolzen in die Langlöcher eingeführt und es stellt sich dann auch auf diese Weise der von den Verzahnungsdaten der Planeten, der Sonne und des Hohlrades bestimmte Achsabstand ein. Toleranzen der Teile werden automatisch ausgeglichen.

Von der Erfindung sind auch Baureihen umfasst, die Kombinationen von einer oder mehrerer beschriebenen erfindungsgemäßen Baugrößen mit Varianten umfassen. Des Weiteren umfasst die Erfindung Baureihen, die nicht nur die beschriebenen erfindungsgemäßen Varianten umfassen sondern auch andere Getriebestufen.

Bei weiteren erfindungsgemäßen Ausführungsbeispielen ist der Radius a1 der ersten Sorte Bohrungen und der Radius a2 der zweiten Sorte Bohrungen gleich und die Anzahl aller Bohrlöcher auf der Stegwange des Planetenträgers weist zwei oder mehr Primfaktoren auf. Beispielsweise ist diese Anzahl 12 = 4 x 3. Somit sind mit dem selben Planetenträger entweder eine Planetengetriebestufe mit drei Planetenbolzen und drei Stegbolzen ausführbar oder eine Planetengetriebestufe mit vier Planetenbolzen und vier bis acht Stegbolzen ausführbar. Insbesondere ist der Winkel-Abstand zwischen den Planeten- und/oder Stegbolzen gleichmäßig ausführbar, also beispielsweise sind die Planetenbolzen mit einem Winkel von 120° zueinander bei drei Planetenbolzen oder mit einem Winkel von 90° zueinander bei vier Planetenbolzen anordenbar. Je nach Positionierung und Dimensionierung der Bohrungen lassen sich auch andere, vorteilhafterweise mehrfach verwendbare Planetenträger fertigen.

Bei anderen erfindungsgemäßen Ausführungsbeispielen ist der Radius a1 der ersten Sorte Bohrungen vom Radius a2 der zweiten Sorte Bohrungen verschieden. Je nach Positionierung und Dimensionierung der Bohrungen lassen sich auch hierbei andere vorteilhaft mehrfach verwendbare Planetenträger fertigen für Planetengetriebestufen mit verschiedenen Anzahlen von Planetenbolzen und/oder Stegbolzen.

Bei anderen erfindungsgemäßen Ausführungsbeispielen umfasst der Bausatz für die Baureihe einen Planetenträger, in dessen Bohrungen der ersten oder zweiten Sorte die Planetenbolzen eingepresst sind, also mittels Presspassung verbunden sind. Insbesondere sind dabei die Stegbolzen entbehrlich, wenn die Planetenbolzen entsprechend dimensioniert, ausgeführt und verbunden sind.

Bei weiteren erfindungsgemäßen Ausführungsbeispielen sind die vorgenannten Bohrungen für die Stegbolzen weggelassen, wodurch Kosten einsparbar sind. Der Bausatz umfasst bei einer Baugröße aber, wie oben ausführlich geschildert, einen ersten Planetenträger mit nur der ersten Sorte Bohrungen und einen weiteren Planetenträger mit nur der zweiten Sorte Bohrungen. Somit umfasst dann der Bausatz Planetenträger, die zwar nur zum Verbinden, insbesondere Einpressen, mit Planentenbolzen vorgesehen sind, aber je nach Variante ist ein entsprechend verschiedener Achsabstand a1 oder a2 bei den Planetenbolzen realisierbar.

Durch das Weglassen von Stegbolzen ergibt sich außerdem ein Platzvorteil, wodurch bei jeder der genannten Varianten drei Übersetzungen oder sogar mehr sich realisieren lassen, da die Verzahnungsdaten entsprechend abänderbar sind. Dies ist ebenfalls ein wesentliches Merkmal der gesamten Baureihe.

In Weiterbildung umfasst der Bausatz auch die vorgenannten Planetenträger mit zwei Sorten von Bohrungen. Somit ist noch eine größere Variationsmögüchkeit zugänglich, ohne dass die Teilezahl zu erhöhen ist.

Bei anderen erfindungsgemäßen Ausführungsbeispielen werden nicht nur zwei Bohrungsbilder, also die zwei genannten Sorten von Bohrungen, in der Stegwange (27,38) vorgesehen, sondern mindestens drei Bohrungsbilder. Davon ist das erste Bohrungsbild durch Planetenbolzen besetzbar und die restlichen sind mit Stegbolzen besetzbar oder können auch zumindest teilweise je nach erforderlicher mechanischer Stabilität unbesetzt bleiben. Somit ist eine hohe Steifigkeit und mechanische Stabilität erreichbar. Darüber hinaus können Planetenbolzen entweder in das zweite, dritte oder weitere Bohrungsbild eingesetzt werden. Auf diese Weise ist eine große Variantenanzahl ohne wesentliche Teilezahlerhöhung kostengünstig herstellbar, wobei eine enorme mechanische Stabilität erreichbar ist.

Bei weiteren erfindungsgemäßen Ausführungsbeispielen umfasst das Bohrungsbild für die Planetenbolzen 4 oder 5 Bohrungen. Bei großen Getriebeausführungen, insbesondere Industriegetriebeausführungen, sind sogar 6 oder mehr Bohrungen für Planetenbolzen vorteilhaft. Mit zunehmender Anzahl von Planeten ist ein größeres Drehmoment übertragbar. Außerdem lassen sich mit größeren Anzahl von Bohrungen pro Bohrungsbild insgesamt noch mehr Varianten ohne zusätzliche Bauteile erzeugen.

## Patentansprüche

1. Bausatz für eine Baureihe von Planetengetrieben,
wobei die Baureihe mindestens eine Baugröße, insbesondere eine mittels einer Achshöhe der Abtriebswelle definierte, umfasst,
wobei die mindestens eine Baugröße mindestens zwei Varianten umfasst,
wobei das Planetengetriebe mindestens eine Planetengetriebestufe umfasst,
wobei der Bausatz zumindest einen eine Stegwange (38) oder zwei Stegwangen aufweisenden Planetenträger (31), Planeten (3,23,43), Sonne und Hohlrad umfasst,
wobei der Planetenträger (31) auf seiner Stegwange (38) eine erste Sorte (32) Bohrungen und eine zweite Sorte (33) Bohrungen umfasst,
die Bohrungen der ersten Sorte (32) auf einem ersten Kreis mit einem ersten Radius a1 zur fiktiven Achse des Planetenträgers (31) angeordnet sind,
und die Bohrungen der zweiten Sorte (33) auf einem zweiten Kreis mit einem zweiten Radius a2 zur fiktiven Achse des Planetenträgers (31) angeordnet sind
**dadurch gekennzeichnet, dass**
innerhalb einer Baugröße
bei einer ersten Variante Planetenbolzen (5,25,35,45) in der ersten Sorte (32) Bohrungen vorgesehen sind und
bei einer zweiten Variante Planetenbolzen (5,25,35,45) in der zweiten Sorte (33) Bohrungen vorgesehen sind,
wobei die zweite Variante aus der ersten Variante durch bloßes Umstecken der Planetenbolzen von der ersten in die zweite Sorte Bohrungen ausgeführt ist.

2. Bausatz nach Anspruch 1,
**dadurch gekennzeichnet, dass**
der erste Radius a1 und der zweite Radius a2 gleich sind.

3. Bausatz nach Anspruch 2,
**dadurch gekennzeichnet, dass**
erste Sorte Bohrungen und zweite Sorte Bohrungen unterschiedliche Bohrungsdurchmesser aufweisen.

4. Bausatz nach mindestens einem der vorangegangenen Ansprüche,
**dadurch gekennzeichnet, dass**
die Baureihe eine erste und eine zweite Baugrößen umfasst,
wobei die erste Baugröße eine erste Variante mit Planetenbolzen (5,25,35,45) in einer ersten Sorte Bohrungen und eine zweite Variante mit Planetenbolzen (5,25,35,45) in einer zweiten Sorte Bohrungen umfasst,
und wobei die zweite Baugröße mindestens eine dritte Variante umfasst,
und wobei das maximal übertragbare Drehmoment der zweiten Variante dem der dritten Variante gleicht.

5. Bausatz nach mindestens einem der vorangegangenen Ansprüche,
**dadurch gekennzeichnet, dass**
die Stufung der maximal übertragbaren Drehmomente mehrerer Varianten in Baugrößen derart ist, dass das maximal übertragbare Drehmoment einer jeweiligen Variante dem maximal übertragbaren Drehmoment einer Variante einer jeweils anderen Baugröße entspricht.

6. Bausatz nach Anspruch 1,
**dadurch gekennzeichnet, dass**
der erste Radius a1 größer oder kleiner ist als der zweite Radius a2.

7. Bausatz nach mindestens einem der vorangegangenen Ansprüche,
**dadurch gekennzeichnet, dass**
die erste (32) und/oder zweite Sorte (33) Bohrungen exzentrisch ausgeführt sind.

8. Bausatz nach mindestens einem der vorangegangenen Ansprüche,
**dadurch gekennzeichnet, dass**
die Planeten (3,23,43) mit ihren zugehörigen Lagern auf Hülsen mit exzentrisch ausgeführter Bohrung sitzen, die auf die zylindrischen Planetenbolzen (5,25,35,45) aufgesteckt sind.

9. Bausatz nach mindestens einem der vorangegangenen Ansprüche,
**dadurch gekennzeichnet, dass**
auf die dünneren Bolzen aufgesteckte Hülsen vorgesehen sind, die zur Durchmesseranpassung je nach Variante verwendbar oder herausnehmbar sind, insbesondere zum Herstellen anderer Varianten unter Verwendung derselben Komponenten, wie Lager für Planeten (3,23,43), Planeten, Sonne, Hohlrad, Planetenträger (1,21,31,41), Wangen und Bolzen, mit Ausnahme der Hülsen.

10. Bausatz nach mindestens einem der vorangegangenen Ansprüche,
**dadurch gekennzeichnet, dass**
außer erster und zweiter Sorte von Bohrungen eine oder mehrere weitere Sorten von Bohrungen vorgesehen sind, insbesondere mit verschiedenen Durchmessern und/oder verschiedenen Radien.

11. Bausatz nach mindestens einem der vorangegangenen Ansprüche,
**dadurch gekennzeichnet, dass**
die Planetenbolzen mittels Presspassung mit dem Planetenträger verbunden sind, also in eine Sorte Bohrungen eingepresst sind.

12. Bausatz nach mindestens einem der vorangegangenen Ansprüche,
**dadurch gekennzeichnet, dass**
die erste Sorte Bohrungen und eine weitere Sorte Bohrungen, wie zweite Sorte oder dergleichen, mindestens eine Bohrung gemeinsam verwenden, insbesondere bei gleichem jeweils zugeordneten Radius.

13. Antrieb,
umfassend Motor, insbesondere Elektromotor, und Getriebe,
**dadurch gekennzeichnet, dass**
das Getriebe eine Planetengetriebestufe nach Anspruch 1 umfasst.

14. Antrieb nach Anspruch 13,
**dadurch gekennzeichnet, dass**
der Antrieb ein Servoantrieb, insbesondere ein spielarmer und verdrehsteifer Servoantrieb, ist.

15. Planetengetriebe
**dadurch gekennzeichnet, dass**
es eine Planetengetriebestufe nach Anspruch 1 umfasst.

## Claims

1. A kit for a series of planetary gears,
in which the series includes at least one size, in particular one defined by means of an axial height of the output shaft,
in which the at least one size includes at least two variants,
in which the planetary gear includes at least one planetary gear stage,
in which the kit includes at least one planet carrier (31) having a flange-type side piece (38) or two flange-type side pieces, planet wheels (3, 23, 43), a sun wheel and a ring gear,
in which the planet carrier (31) includes on its side piece (38) a first sort (32) of bore and a second sort (33) of bore,
the bores of the first sort (32) being arranged on a first circle having a first radius a1 with respect to the notional axis of the planet carrier (31),
and the bores of the second sort (33) being arranged on a second circle having a second radius a2 with respect to the notional axis of the planet carrier (31),
**characterised in that**,
within one size,
in a first variant planet wheel pins (5, 25, 35, 45) are provided in the first sort (32) of bore and
in a second variant planet wheel pins (5, 25, 35, 45) are provided in the second sort (33) of bore,
with the second variant being created from the first variant simply by moving the planet wheel pins from the first sort of bore into the second sort of bore.

2. A kit according to Claim 1,
**characterised in that**
the first radius a1 and the second radius a2 are the same.

3. A kit according to Claim 2,
**characterised in that**
the first sort of bore and the second sort of bore have different bore diameters.

4. A kit according to at least one of the preceding claims,
**characterised in that**
the series includes a first size and a second size,
in which the first size includes a first variant having planet wheel pins (5, 25, 35, 45) in a first sort of bore and a second variant having planet wheel pins (5,25, 35, 45) in
a second sort of bore,
and in which the second size includes at least a third variant,
and in which the maximum transmissible torque of the second variant is the same as that of the third variant.

5. A kit according to at least one of the preceding claims,
**characterised in that**
the classification of the maximum transmissible torques of a number of variants into sizes is such that the maximum transmissible torque of a respective variant corresponds to the maximum transmissible torque of a variant of a respectively other size.

6. A kit according to Claim 1,
**characterised in that**
the first radius a1 is larger or smaller than the second radius a2.

7. A kit according to at least one of the preceding claims,
**characterised in that**
the first (32) and/or second (33) sorts of bore are of an eccentric construction.

8. A kit according to at least one of the preceding claims,
**characterised in that**
the planet wheels (3, 23, 43) are seated with their associated bearings on tubes having a bore of eccentric construction, which are pushed onto the cylindrical planet wheel pins (5, 25, 35, 45).

9. A kit according to at least one of the preceding claims,
**characterised in that**
tubes pushed onto the thinner pins are provided and may be used or removed to match the diameter depending on the variant, in particular in order to create other variants using the same components, such as bearings for planet wheels (3, 23, 43), planet wheels, sun wheel, ring gear, planet carrier (1, 21, 31, 41), side pieces and pins, with the exception of the tubes.

10. A kit according to at least one of the preceding claims,
**characterised in that**
apart from the first and second sorts of bore, one or more further sorts of bore are provided, in particular having different diameters and/or different radii.

11. A kit according to at least one of the preceding claims,
**characterised in that**
the planet wheel pins are connected to the planet carrier by means of a press fit, that is to say they are pressed into one sort of bore.

12. A kit according to at least one of the preceding claims,
**characterised in that**
the first sort of bore and a further sort of bore, for example the second sort or the like, use at least one bore in common, in particular if the respective associated
radius is the same.

13. A drive,
including a motor, in particular an electric motor, and a gear,
**characterised in that**
the gear includes a planetary gear stage according to Claim 1.

14. A drive according to Claim 13,
**characterised in that**
the drive is a servo drive, in particular a servo drive with low play and high torsional rigidity.

15. A planetary gear,
**characterised in that**
it includes a planetary gear stage according to Claim 1.

## Revendications

1. Prêt-à-monter ou kit pour une série d'engrenages planétaires, la série comprenant au moins une taille de construction, notamment une taille définie au moyen d'une hauteur d'axe de l'arbre de sortie,
la taille de construction au moins unique comprenant au moins deux variantes,
l'engrenage planétaire comprenant au moins un étage d'engrenage planétaire,
le prêt-à-monter ou kit comprenant au moins un porte-satellites (31) pourvu d'une joue d'âme (38) ou de deux joues d'âme, des satellites (3, 23, 43), une roue solaire et une couronne,
le porte-satellites (31) comprenant sur sa joue d'âme (38) un premier type (32) de perçages et un deuxième type (33) de perçages,
les perçages du premier type (32) étant disposés sur un premier cercle de premier rayon a1 par rapport à l'axe fictif du porte-satellites (31),
et les perçages du deuxième type (33) étant disposés sur un deuxième cercle de deuxième rayon a2 par rapport à l'axe fictif du porte-satellites (31),
**caractérisé en ce que**, pour une même taille de construction,
dans une première variante, des goujons de satellites (5, 25, 35, 45) sont prévus dans le premier type (32) de perçages,
et dans une deuxième variante, des goujons de satellites (5, 25, 35, 45) sont prévus dans le deuxième type (33) de perçages,
la deuxième variante étant obtenue à partir de la première variante en déplaçant simplement les goujons de satellites du premier type de perçages dans le deuxième type de perçages.

2. Prêt-à-monter selon la revendication 1, **caractérisé en ce que** le premier rayon a1 et le deuxième rayon a2 sont identiques.

3. Prêt-à-monter selon la revendication 2, **caractérisé en ce que** le premier type de perçages et le deuxième type de perçages présentent des diamètres de perçages différents.

4. Prêt-à-monter selon au moins une des revendications précédentes,
**caractérisé en ce que** la série comprend une première et une deuxième tailles de construction,
la première taille comprenant une première variante avec des goujons de satellites (5, 25, 35, 45) dans un premier type de perçages et une deuxième variante avec des goujons de satellites (5, 25, 35, 45) dans un deuxième type de perçages,
et la deuxième taille comprenant au moins une troisième variante,
et le couple maximal transmissible de la deuxième variante étant équivalent à celui de la troisième variante.

5. Prêt-à-monter selon au moins une des revendications précédentes,
**caractérisé en ce que** la gradation des couples maximaux transmissibles de plusieurs variantes dans des tailles de construction est telle que le couple maximal transmissible d'une variante respective correspond au couple maximal transmissible d'une variante d'une autre taille de construction respective.

6. Prêt-à-monter selon la revendication 1, **caractérisé en ce que** le premier rayon a1 est supérieur ou inférieur au deuxième rayon a2.

7. Prêt-à-monter selon au moins une des revendications précédentes,
**caractérisé en ce que** le premier type (32) et/ou le deuxième type (33) de perçages sont réalisés excentriques.

8. Prêt-à-monter selon au moins une des revendications précédentes,
**caractérisé en ce que** les satellites (3, 23, 43) sont montés par des paliers qui leur sont associés sur des douilles dotées d'un perçage excentrique, qui sont emmanchées sur les goujons de satellites cylindriques (5, 25, 35, 45).

9. Prêt-à-monter selon au moins une des revendications précédentes,
**caractérisé en ce qu'**il est prévu des douilles qui sont emmanchées sur les goujons plus minces et qui peuvent être utilisées ou retirées selon la variante aux fins d'adaptation de diamètre, en particulier en vue de réaliser d'autres variantes en utilisant les mêmes éléments, comme les paliers pour les satellites (3, 23, 43), les satellites, la roue solaire, la couronne, les porte-satellites (1, 21, 31, 41), les joues et les goujons, à l'exception des douilles.

10. Prêt-à-monter selon au moins une des revendications précédentes,
**caractérisé en ce que**, en plus du premier et du deuxième types de perçages, il est prévu un ou plusieurs types supplémentaires de perçages, en particulier avec des diamètres différents et/ou des rayons différents.

11. Prêt-à-monter selon au moins une des revendications précédentes,
**caractérisé en ce que** les goujons de satellites sont reliés en ajustement serré au porte-satellites, donc sont emmanchés à force dans un type de perçages.

12. Prêt-à-monter selon au moins une des revendications précédentes,
**caractérisé en ce que** le premier type de perçages et un autre type de perçages, comme le deuxième type ou des types analogues, utilisent conjointement au moins un perçage, en particulier lorsque le rayon qui leur est respectivement associé est identique.

13. Entraînement, comprenant un moteur, notamment un moteur électrique, et une transmission, **caractérisé en ce que** la transmission comprend un étage d'engrenage planétaire selon la revendication 1.

14. Entraînement selon la revendication 13, **caractérisé en ce que** l'entraînement est un servo-entraînement, notamment un servo-entraînement à faible jeu et rigide en torsion.

15. Engrenage planétaire, **caractérisé en ce qu'**il comprend un étage d'engrenage planétaire selon la revendication 1.
